# DEMANDE DE BREVET EUROPEEN

(11) **EP 2 096 125 A2**
(43) Date de publication de la demande: **02.09.2009**
(21) Numéro de dépôt: 08169700.5
(22) Date de dépôt: 05.08.2004
(51) Int. Cl.: C08F 2/44, B01J 21/18, C01B 31/02, C08K 7/24

(54) **Composites à base de polymère comprenant comme charge des nanotubes de carbone**

(30) Priorité: 05.08.2003 US 492613 P; 04.02.2004 EP 04447025
(62) Demande divisionnaire de: 04761474.8
(71) Demandeur: Nanocyl S.A., 5060 Sambreville (BE)
(72) Inventeur: Dubois, Philippe, B-4260, BRAIVES (BE); Alexandre, Michael, B-4102, OUGREE (BE); Bonduel, Daniel, B-7000, MONS (BE); Mainil, Michael, B-7100, TRIVIERES (BE)
(74) Mandataire: pronovem

(57) **Abrégé**

Nanocomposite comprenant une dispersion de nanotubes de carbone au sein d'une matrice polymérique, dans lequel ladite matrice polymérique comporte une polyoléfine polymérisée in situ sur lesdits nanotubes de carbone ladite polyoléfine formant un enrobage autour dudit nanotube de carbone.

## Description

### Objet de l'invention

La présente invention concerne le domaine des matériaux, et plus particulièrement le domaine des matériaux composites définis ci-dessous comme des microcomposites et des nanocomposites.

La présente invention se rapporte notamment à un procédé pour obtenir un matériau composite comprenant une matrice d'au moins un polymère dans laquelle des nanotubes de carbone faisant fonction de charge sont dispersés. La présente invention concerne aussi lesdits composites ainsi obtenus et leurs applications dans le domaine des nanotechnologies.

### Etat de la technique

Les matériaux polymères ont été mis au point au début du vingtième siècle et ils occupent actuellement une place de plus en plus importante dans notre vie quotidienne.

Pour autant la pression industrielle actuellement est telle qu'elle exige une spécialisation croissante des applications et qu'il est donc nécessaire de proposer des matériaux de plus en plus performants pour y répondre.

Dans le cas des matériaux polymères, cette exigence suppose de proposer des solutions pour remédier aux faiblesses inhérentes que présentent ces matériaux et qui sont notamment leur relatif manque de résistance mécanique et leur caractère inflammable.

Il a ainsi déjà été proposé d'associer ces matériaux polymères à d'autres composantes appelées « charges » en vue de produire des matériaux dits « matériaux composites à matrice polymère » dont les propriétés sont renforcées par rapport à la matrice polymère seule : plus grande rigidité, meilleure résistance au feu, ...

Ces charges peuvent être de type fibrillaire telles que les fibres de verre, de carbone ou de Kevlar. Ces charges peuvent aussi être de type particulaire telles que les noirs de carbone, les silices, les alumines, les carbonates de calcium, les argiles ou les billes de verre.

A titre d'exemple, il a été proposé de réaliser des composites à base de copolyoléfines par polymérisation desdites oléfines sur des charges en présence d'un couple cocatalyseur/catalyseur selon la technique connue en anglais sous le nom de « Polymerization-Filling Technique » ou « PFT » (Alexandre M. et al. Macromol. Rapid. Comm. (2000), vol.21, no.13, pp.931-936). Le catalyseur testé était un métallocène, plus précisément le tert-Butylamidodimethyl(tetramethyl-n5-cyclopentadienyl)-silane dimethyltitanium (CGC) et le cocatalyseur était le methylaluminoxane (MAO). Différentes charges ont été testées parmi lesquelles le kaolin et le graphite. Ces charges étaient de natures très différentes en terme de composition (inorganique, organique ou métallique), en terme de morphologie et de propriétés de surface (acides ou basiques), mais elles avaient toutes en commun d'avoir une surface spécifique compatible avec la quantité de catalyseur utilisée qui était relativement faible, de façon à permettre un dépôt suffisamment uniforme du catalyseur à la surface de ces charges et obtenir ainsi de bons résultats en polymérisation.

Parmi les composites à matrice polymère et à charges particulaires on distingue selon la taille des particules les microcomposites, dont la dimension de la charge est supérieure ou égale au micromètre, et les nanocomposites pour lesquels une des trois dimensions de la charge est de l'ordre de un à quelques dizaines de nanomètres.

Les nanocomposites ont donné lieu très récemment à un développement de recherches considérables. En effet, ils sont caractérisés par des propriétés remarquables pour des taux de charge relativement faibles : ils entraînent une amélioration importante des propriétés mécaniques de la matrice polymère telle que la rigidité et développent un pouvoir retardateur de flamme qui les rendent très intéressants. De plus, contrairement aux charges de type fibrillaires, ils renforcent la matrice polymère dans toutes les directions de l'espace [1,2].

Plus particulièrement, des nanocomposites comprenant comme charges particulaires des nanotubes de carbone ont déjà été proposés pour différentes applications [3-6]. Les nanotubes de carbone sont en fait une des formes allotropiques du carbone que l'on peut voir comme un ou plusieurs feuillets de graphites enroulés en cylindre et qui seraient scellés aux extrémités. Ces nanotubes de carbone sont, entre autres, caractérisés par de bonnes propriétés mécaniques puisqu'ils sont 40 fois plus résistants en traction que les fibres de carbone, ainsi que de bonnes propriétés électriques à tel point qu'ils ont été proposés pour la fabrication de semi-conducteurs ou de conducteurs métalliques, selon la structure du nanotube.

En pratique cependant, l'utilisation des nanotubes comme charges dans des matrices polymères pour fabriquer des nanocomposites ne semble pas être pour l'instant à la hauteur des espérances industrielles. En effet, il s'avère que dans les faits les propriétés avantageuses des nanotubes de carbone ne sont pas toujours transférées au nanocomposite.

On explique cette donnée par l'aptitude naturelle qu'ont les nanotubes de carbone à s'agréger ensemble par paquets ou « fagots » très stables.

L'homme de l'art est donc confronté à ce problème d'agrégation des nanotubes qui limite leur utilisation dans les nanocomposites et aujourd'hui encore l'homme de l'art reste malheureusement en attente d'une solution efficace qui permettrait d'y remédier.

On notera que l'utilisation des nanotubes de carbone dans des systèmes catalytiques est connue en soi, comme l'attestent les documents US-A1-2003/0119920 et Patent Abstracts of Japan vol.2000, no.6 (22.09.2000).

Le premier de ces documents décrit un système catalytique comprenant un support recouvert d'une couche de nanotubes de carbone et une composition catalyseur apte à catalyser une réaction chimique. Ce système catalytique peut être utilisé dans de nombreuses réactions chimiques et notamment dans des polymérisations. Les nanotubes de carbone ne sont pas pour autant présentés dans ce document comme faisant partie intégrante du support catalytique lui-même.

Le second de ces documents décrit un procédé pour le dépôt de nanotubes de carbone sur du molybdène catalytique sur un support inorganique. Dans ce document, le système catalytique comprend donc (i) des nanotubes de carbone, (ii) un catalyseur qui est du molybdène et (iii) un support inorganique qui peut être assimilé à un cocatalyseur, les nanotubes de carbone constituant le produit de la réaction catalysée pat ledit catalyseur.

### Buts de l'invention

La présente invention vise à fournir une solution qui ne présente pas les inconvénients de l'état de la technique tels que décrits ci-dessus.

En particulier, la présente invention vise à fournir un procédé qui permettrait d'obtenir des nanotubes de carbone à l'état dispersé au sein d'une matrice polymère et aptes à être utilisés comme charge dans des composites à base de polymère, et notamment des nanocomposites.

La présente invention vise également à fournir des composites, et notamment des nanocomposites comprenant une matrice d'au moins un polymère et au moins des nanotubes de carbone faisant fonction de charges, dans lesquels la dispersion des nanotubes de carbone serait telle que le composite, et notamment le nanocomposite, combinerait avantageusement les propriétés physiques et chimiques intéressantes d'un point de vue industriel dudit polymère et desdits nanotubes de carbone.

Un autre but de l'invention est de fournir un procédé de dispersion de nanotubes de carbone au sein d'une matrice polymère dont la mise en oeuvre serait relativement simple et raisonnable en terme de coût par rapport aux procédés proposés dans l'état de la technique.

### Résumé de l'invention

La présente invention se rapporte à un procédé pour obtenir des nanotubes de carbone à l'état dispersé, caractérisé en ce qu'il comprend une étape de polymérisation à partir d'au moins un monomère dit d'intérêt et en présence d'un système catalytique, ledit système catalytique comprenant un couple catalytique co-catalyseur/catalyseur qui est supporté par un support de catalyse, ledit support de catalyse correspondant auxdits nanotubes de carbone.

Plus précisément, la présente invention se rapporte à un procédé pour obtenir un matériau composite comprenant au moins une matrice polymère dans laquelle des nanotubes de carbone faisant fonction de charge sont dispersés de façon homogène, ledit procédé étant caractérisé en ce que partant desdits nanotubes de carbone et d'un monomère, on utilise lesdits nanotubes de carbone comme support de catalyse pour y fixer en surface et de façon homogène un couple co-catalyseur/catalyseur et former ainsi un système catalytique, on rend ledit système catalytique actif en polymérisation, et on réalise à l'aide dudit système catalytique actif la polymérisation dudit monomère à la surface des nanotubes de carbone en laissant évoluer la polymérisation au cours du temps de manière à constituer ainsi au fur et à mesure de la polymérisation du monomère la matrice polymère autour des nanotubes de carbone puis on récupère alors le composite formé.

On entend par « dispersion des nanotubes au sein de la matrice polymère » une dispersion des nanotubes dans ladite matrice telle que la surface de contact entre deux nanotubes de carbone est inférieure à 20% de la surface totale desdits nanotubes, de préférence inférieure à 10%, de préférence inférieure à 5%, inférieure à 2%, de préférence inférieure à 1% de la surface totale desdits nanotubes.

On entend par « homogène » une distribution des nanotubes de carbone au sein de la matrice polymère homogène au moins à l'échelle microscopique, et de préférence à l'échelle nanoscopique.

De préférence, le procédé selon l'invention comprend les étapes suivantes:
- on prépare une suspension de nanotubes de carbone dans un solvant inerte;
- on fait subir un prétraitement auxdits nanotubes de carbone par addition dudit cocatalyseur, de manière à obtenir une suspension de nanotubes de carbone prétraités dans laquelle le cocatalyseur est adsorbé à la surface des nanotubes de carbone ;
- on prépare un mélange réactionnel à partir de la suspension de nanotubes de carbone ainsi prétraités en ajoutant un catalyseur et en faisant circuler un flux de monomère au niveau de ladite suspension de nanotubes prétraités de manière à provoquer dans ledit mélange réactionnel la polymérisation dudit monomère à la surface desdits nanotubes et à former ainsi un matériau composite comprenant ledit polymère d'intérêt et lesdits nanotubes de carbone, dans lequel lesdits nanotubes de carbone sont gainés par ledit polymère d'intérêt;
- on arrête la réaction de polymérisation lorsque la polymérisation dans le mélange réactionnel a atteint le taux de polymérisation souhaité et compris entre environ 0.1% et environ 99.9% et on récupère ledit matériau composite ainsi synthétisé.

De préférence, le monomère d'intérêt est une oléfine et le polymère d'intérêt est une polyoléfine.

Ladite polyoléfine peut être notamment une polyoléfine hydrophobe.

De préférence, ledit monomère d'intérêt est sélectionné parmi le groupe constitué par l'éthylène, le propylène, leurs co-polymères avec des alpha-oléfines, les alpha-dioléfines conjuguées, le styrène, les cycloalcènes, le norbornène, le norbornadiène, le cyclopendadiène, et les mélanges de ceux-ci.

Des exemples d'alpha-oléfines sont le 1-hexène et le 1-octène.

De préférence, le polymère d'intérêt est sélectionné parmi le groupe constitué par les polyoléfines à base d'éthylène et les polyoléfines à base de propylène et les mélanges de celles-ci.

Avantageusement, le polymère d'intérêt est le polyéthylène.

Avantageusement, dans le procédé de l'invention, on choisit le couple cocatalyseur/catalyseur et les paramètres expérimentaux de manière à pouvoir immobiliser le catalyseur à la surface des nanotubes de carbone par l'intermédiaire du cocatalyseur et former ainsi le système catalytique.

Ainsi, de préférence, on choisit le catalyseur tel qu'il soit apte à catalyser la polymérisation du monomère d'intérêt, ledit catalyseur étant sélectionné parmi le groupe des métallocènes, des chélates amido-aryle encombrés, les chélates oxo-aryle encombrés, les bis(imino)pyridines de Fe(II et III) et Co(II), les complexes de Brookhart à base de Ni(II) et Pd(II) et les mélanges de ceux-ci.

De manière générale, tous ces catalyseurs ont en commun d'être des complexes solubles du groupe IV des éléments chimiques (Ti, Zr, Hf) actifs en polymérisation.

On notera que les métallocènes peuvent être pontés ou non.

Avantageusement aussi, le cocatalyseur est le méthylaluminoxane ou un méthylaluminoxane chimiquement modifié ou un mélange de ceux-ci.

On entend par exemple par « méthylaluminoxane chimiquement modifié » un méthylaluminoxane dans lequel environ un tiers des alkyles se présentent sous la forme d'isobutyles, le restant desdits alkyles étant sous la forme de méthyles.

De façon particulièrement avantageuse, le couple catalytique cocatalyseur/catalyseur est le couple méthylaluminoxane/ Cp*₂ZrCl₂.

De préférence, la quantité de catalyseur dans le procédé de l'invention est comprise entre environ 10⁻⁶ et environ 10⁻⁵ mole/g de nanotubes de carbones.

De préférence, la quantité de cocatalyseur dans le mélange réactionnel est comprise entre environ 10⁻³ et environ 10⁻² mole/g de nanotubes de carbones.

Avantageusement, la température du mélange réactionnel est comprise entre 25° et 140°C.

De préférence selon l'invention, le prétraitement est effectué à une température comprise entre 25°C et 200°C pendant une durée comprise entre 1 min et 2 heures.

Avantageusement, la polymérisation est effectuée à une pression comprise entre environ 1 et environ 3 bars en monomère, et de préférence entre 1.1 et 2.7 bars en monomère.

De préférence, en vue de préparer le mélange réactionnel, le catalyseur est ajouté à la suspension de nanotubes de carbone prétraités avant de faire circuler le flux de monomère au niveau de la dite suspension.

De façon alternative, en vue de préparer le mélange réactionnel, l'ajout du catalyseur à la suspension de nanotubes de carbone prétraités et la circulation du flux de monomère au niveau de ladite suspension sont concommitents.

De préférence, les nanotubes de carbone sont sélectionnés parmi le groupe constitué par les nanotubes de carbone simple paroi, les nanotubes de carbone double-paroi, les nanotubes de carbone multi-paroi et les mélanges de ceux-ci.

De préférence, les nanotubes de carbone sont des nanotubes de carbone bruts et/ou purifiés.

Dans le procédé de l'invention, les nanotubes de carbone peuvent être des nanotubes de carbone fonctionnalisés.

De préférence, on arrête la réaction de polymérisation lorsque le taux de polymérisation est tel que le composite comprend entre environ 50% et environ 99.9% de nanotubes de carbone et entre environ 50% et 0.1% de polymère.

Dans ce dernier cas, le procédé selon l'invention comprend de préférence une étape supplémentaire au cours de laquelle le matériau composite une fois récupéré est utilisé comme mélange-maître pour préparer un nanocomposite à base d'un polymère dit polymère d'addition, ledit polymère d'addition étant miscible et compatible avec le polymère d'intérêt du matériau composite.

De manière alternative, on arrête la réaction de polymérisation lorsque le taux de polymérisation est suffisant pour obtenir en quantité satisfaisante un matériau composite correspondant à un nanocomposite et comprenant une matrice dudit polymère d'intérêt dans laquelle les nanotubes de carbone sont dispersés de façon homogène à l'échelle nanoscopique.

Plus précisément, on arrête de préférence la réaction de polymérisation lorsque le nanocomposite formé comprend entre environ 0.1% et environ 50% de nanotubes de carbone et entre environ 99.9% et 50% de polymère.

La présente invention se rapporte également à un système catalytique pour mettre en oeuvre le procédé décrit ci-dessus et comprenant au moins des nanotubes de carbone, un cocatalyseur et un catalyseur, ledit catalyseur formant avec ledit cocatalyseur un couple catalytique, dans lequel ledit catalyseur et ledit cocatalyseur sont fixés à la surface desdits nanotubes de carbone.

La présente invention concerne aussi une composition pour mettre en oeuvre ce procédé et comprenant ledit système catalytique.

La présente invention se rapporte aussi à un matériau composite obtenu par le procédé décrit ci-dessus.

Ce matériau composite comprend entre environ 0.1 et 99.9% de nanotubes de carbone et entre environ 99.9% et 0.1% de polymère.

Selon une première forme préférée d'exécution de l'invention, le matériau composite correspond à un nanocomposite et comprend au moins une matrice d'au moins un polymère d'intérêt dans laquelle des nanotubes de carbone sont dispersés sous forme de charges de façon homogène à l'échelle nanoscopique.

De préférence, ce matériau composite comprend entre environ 0.1% et environ 50% de nanotubes de carbone et entre environ 99.9% et environ 50% de polymère.

De préférence, dans le matériau composite selon l'invention les nanotubes de carbone sont gainés our enrobés par le polymère.

L'invention concerne également un matériau composite comprenant une matrice d'au moins un polymère dit polymère d'addition et le matériau composite ainsi que décrit ci-dessus.

Un autre objet de l'invention est l'utilisation du procédé, et/ou du système catalytique, et/ou de la composition, et/ou du matériau composite décrits ci-dessus dans des applications du domaine des nanotechnologies.

La présente invention concerne aussi un procédé pour polymériser un monomère dit monomère d'intérêt, caractérisé en ce qu'il utilise le procédé selon l'invention en laissant évoluer la réaction de polymérisation pendant suffisamment longtemps pour avoir un taux de nanotubes de carbone inférieur à 0.1% et un taux de polymère supérieur à 99.9%.

L'invention concerne également un polymère obtenu par ce procédé.

### Définitions

On se réfèrera aux paragraphes précédents pour comprendre ce que l'on entend dans la présente invention par les termes de « nanocomposites », « microcomposites », « agrégation/désagrégation », « dispersion », « matrice polymère » et « charge ».

On notera que la matrice polymère comprend au moins un polymère.

Le terme « matériaux composites » se rapporte aussi bien à des microcomposites qu'à des nanocomposites.

Pour comprendre précisément ce que l'on entend par matériau composite ou composite dans la présente invention, on pourra se reporter au document « Matériaux et composites » de Berthelot J.M., Ed. Tec & Doc, 3^{ème} édition, Paris 1999 p.3.

Le terme « catalyseur » a dans la présente invention le même sens que celui utilisé par l'homme de l'art dans le domaine de la chimie. Ce terme désigne un composé qui, utilisé à très faible concentration dans un milieu réactionnel, permet d'augmenter la vitesse d'une réaction de polymérisation par interaction avec les réactifs, sans pour autant être altéré chimiquement en fin de réaction.

Le terme « co-catalyseur » a dans la présente invention le même sens que celui utilisé par l'homme de l'art dans le domaine de la chimie. Ce terme désigne un composé apte à agir en synergie avec le catalyseur pour augmenter la vitesse de la réaction de polymérisation.

On appelle « poison » un composé qui inhibe une réaction de polymérisation.

On parle de nanotubes de carbone « simple paroi », « double-parois » ou « multi-parois», selon que les nanotubes sont constitués respectivement d'un, de deux ou de plusieurs feuillets ainsi que décrits précédemment. Cette terminologie est bien connue de l'homme de métier.

### Brève description des figures

La figure la représente de façon schématique le principe du procédé selon la présente invention appliqué au cas du polyéthylène.

La figure 1b montre l'activation du catalyseur zirconocène en surface des nanotubes selon le procédé de l'invention.

La figure 2 présente une comparaison des courbes de cinétique de polymérisation pour la polymérisation de l'éthylène en présence et en absence de nanotubes de carbone multi-parois bruts (MWNTs).

La figure 3 présente une comparaison des courbes de cinétique de polymérisation de l'éthylène selon le procédé de l'invention en utilisant un système catalytique qui comprend ou ne comprend pas des nanotubes de carbone multi-parois bruts.

La figure 4a correspond à une microphotographie électronique SEM réalisée sur un échantillon de nanotubes de carbone MWNTs bruts.

La figure 4b correspond à un zoom réalisé sur l'échantillon de la figure 4a pour visualiser les fagots ou agrégats.

La figure 4c correspond à une microphotographie électronique SEM réalisée sur un échantillon contenant des nanotubes MWNTs bruts avec 10% en poids de polyéthylène et obtenu avec une fixation en cocatalyseur MAO selon le procédé de l'invention.

La figure 4d correspond à un zoom réalisé sur l'échantillon de la figure 4c.

La figure 4e correspond à une microphotographie électronique SEM réalisée sur un échantillon contenant des nanotubes MWNTs bruts avec 42% en poids de polyéthylène et obtenu avec une fixation en cocatalyseur MAO selon le procédé de l'invention.

La figure 4f correspond à un zoom réalisé sur l'échantillon de la figure 4e.

La figure 5a représente une microphotographie en microscopie électronique de transmission (TEM) de l'échantillon photographié aux figures 4a et 4b et correspondant à des nanotubes de carbone MWNTs bruts seuls.

La figure 5b représente une microphotographie en microcopie électronique de transmission (TEM) de l'échantillon photographié aux figures 4e et 4f et correspondant à des nanotubes MWNTs bruts avec 42% en poids de polyéthylène.

La figure 5c représente une microphotographie en microcopie électronique de transmission (TEM) d'un l'échantillon correspondant à des nanotubes MWNTs bruts avec 74% en poids de polyéthylène et obtenu avec une fixation en cocatalyseur MAO selon le procédé de l'invention.

La figure 6 donne une comparaison des thermogrammes TGA sous air pour différents mélanges à base de matrice HDPE. L'échantillon Dabo40a correspond à un mélange ne contenant que la matrice HDPE seule, l'échantillon Dabo40b correspond à un mélange simple d'une matrice HDPE et de nanotubes de carbone MWNTs bruts (2% en poids), et l'échantillon Dabo40c correspond à un mélange d'une matrice HDPE et d'un mélange-maître contenant des nanotubes de carbone MWNTs bruts (2% en poids) tel qu'obtenu selon le procédé de l'invention.

La figure 7 représente une photographie après combustion de l'échantillon Dabo40b tel que défini au paragraphe précédent.

La figure 8 représente une photographie après combustion de l'échantillon Dabo40c tel que défini dans ce même paragraphe.

La figure 9a représente une microphotographie TEM du même échantillon Dabo40b et la figure 9b correspond à un zoom sur la zone contenant un fagot de nanotubes de carbone MWNTs.

La figure 10a représente une microphotographie TEM du même échantillon Dabo40c et la figure 10b correspond à un zoom montrant un nanotube de carbone MWNT isolé.

La figure 11 compare les cinétiques de polymérisation pour une simple polymérisation de l'éthylène et pour une polymérisation de l'éthylène réalisée sur des nanotubes de carbone simple paroi (SWNTs) selon le procédé de l'invvention.

Les figures 12 à 16 comparent les résultats de tests de traction obtenus pour trois types d'échantillons : du polyéthylène haute densité seul ; un composite obtenu par simple mélange de polyéthylène haute densité avec 1% de nanotubes de carbone multi-parois (MWNTs) ; un composite obtenu à partir de polyéthylène haute densité et d'un mélange-maître préparé selon l'invention.

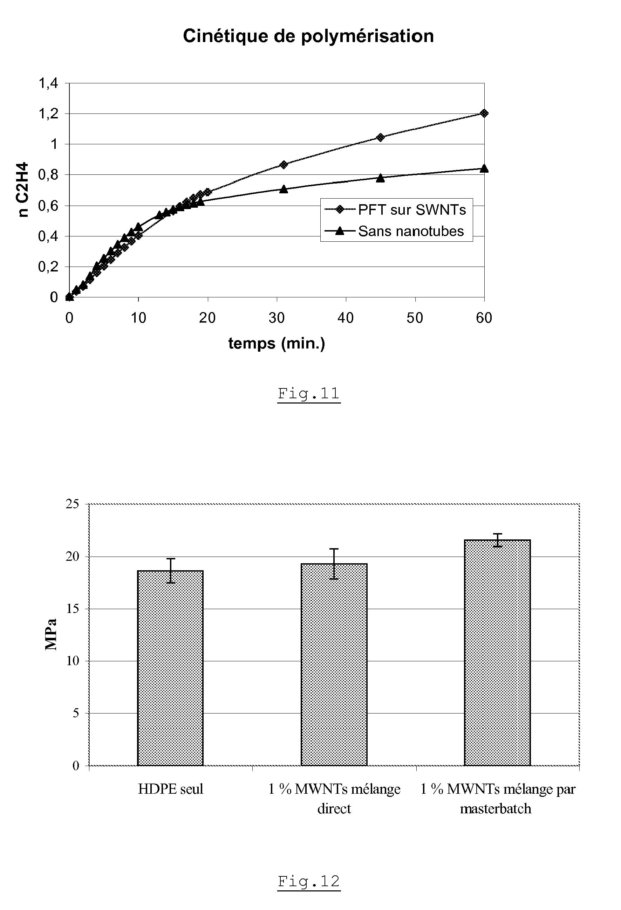

Plus précisément, les figures 12 à 16 comparent les paramètres suivants :
- figure 12 : contrainte à la rupture

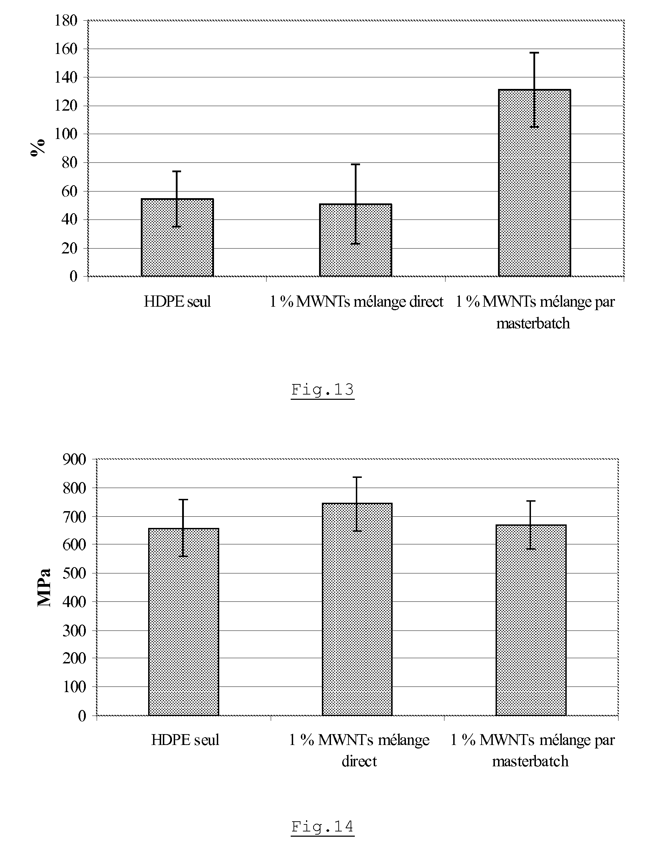

- figure 13 : élongation à la rupture
- figure 14 : module de Young

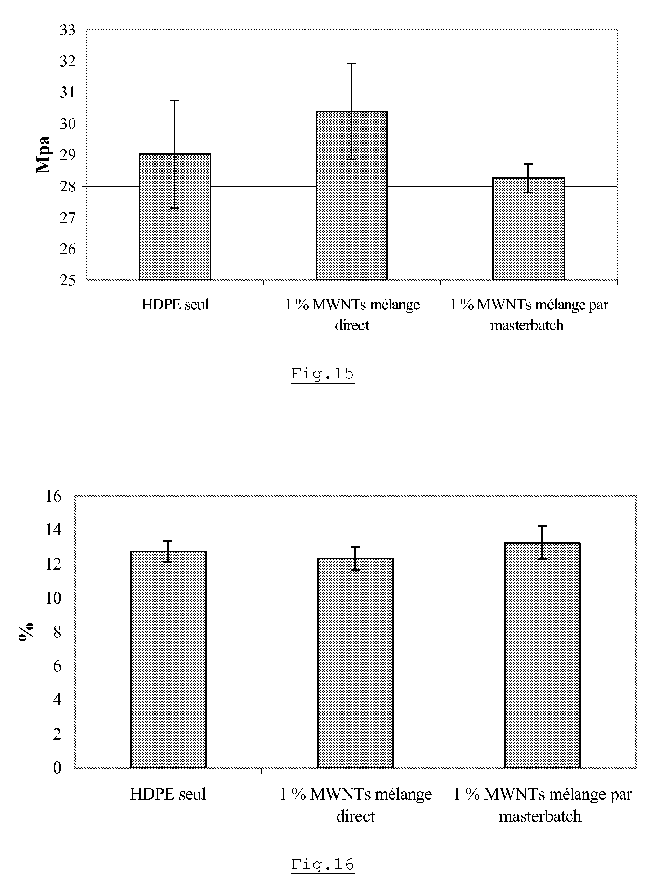

- figure 15 : contrainte au point Yield
- figure 16 : élongation au point Yield

### Description détaillée de l'invention

L'originalité de la présente invention repose sur l'idée de passer, pour préparer des nanocomposites polyéthylène/nanotubes de carbone, par une étape de polymérisation sur charge traitée, selon la technique connue en anglais sous le nom de « Polymerization-Filling Technique » et abrégée par « PFT » [8].

Au cours de cette étape de polymérisation, on fixe en surface de la charge, c'est-à-dire ici de nanotubes de carbone préalablement prétraités et se présentant avantageusement sous forme de suspension, un catalyseur connu pour catalyser la polymérisation du monomère d'intérêt. On amorce alors la polymérisation du monomère considéré directement en surface de cette même charge.

De façon tout à fait inattendue, selon l'invention, la pression en surface des nanotubes, provoquée par la polymérisation au cours de cette étape permet la désagrégation des fagots qui sont habituellement associés à la formation de nanocomposites comprenant des nanotubes de carbone. On obtient ainsi au niveau du nanocomposite une dispersion des nanotubes de carbone sous forme de charge dans la matrice polymère et cette dispersion est homogène à l'échelle nanoscopique.

On notera que le prétraitement des nanotubes de carbone consiste à fixer à la surface des nanotubes de carbone un cocatalyseur sélectionné pour être catalytiquement actif en coopération avec le catalyseur lors de la polymérisation du monomère. En d'autres termes, cela signifie que le cocatalyseur et le catalyseur sont choisis pour former ensemble un couple catalytique de la polymérisation du monomère et que les nanotubes de carbone peuvent être vus comme un support de catalyse qui définit avec ledit couple catalytique un système catalytique.

On doit comprendre que selon la présente invention, la fixation du catalyseur à la surface des nanotubes de carbone est réalisée via le cocatalyseur, de sorte que le catalyseur et le cocatalyseur soient chemisorbés à la surface des nanotubes.

La présente invention est illustrée à travers l'exemple particulier de l'éthylène et de la préparation nanocomposites à base de matrice de polyéthylène.

Néanmoins, l'invention concerne également d'autres polymères et d'autres nanocomposites que l'homme de l'art pourra aisément identifier sur base de la présente description, ainsi que souligné plus haut.

Il en va de même pour la nature du catalyseur et celle du cocatalyseur.

On notera cependant qu'une condition nécessaire à la mise en oeuvre du procédé selon l'invention est que le polymère d'intérêt formé soit insoluble dans le milieu (mélange réactionnel) de polymérisation de manière à ce qu'il puisse précipiter à l'endroit même de sa polymérisation, c'est-à-dire en surface des nanotubes.

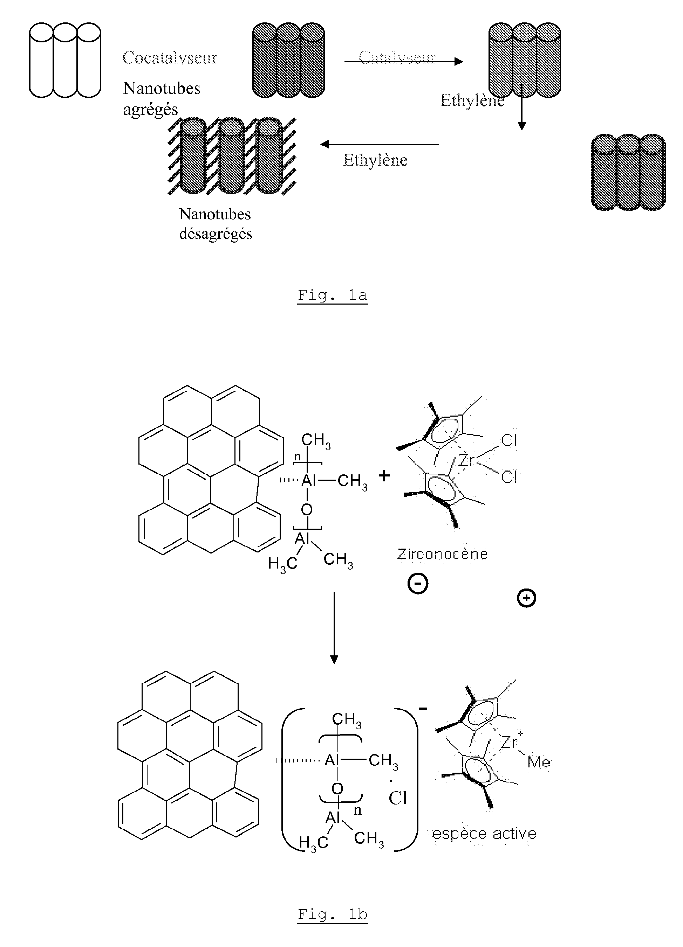

La fig.1a résume le principe du procédé selon la présente invention appliqué au cas du polyéthylène. Ainsi que le montre cette figure, l'éthylène est polymérisé directement en surface des nanotubes en suspension, ce qui conduit à un enrobage ou gainage progressif des nanotubes de carbone par le polyéthylène au fur et à mesure qu'il est synthétisé. Cet enrobage a pour effet de forcer les nanotubes de carbone à se séparer les uns des autres et à provoquer ainsi la désagrégation des fagots de nanotubes.

Le cocatalyseur utilisé à titre d'exemple et avec lequel on prétraite les nanotubes de carbone est le méthylaluminoxane, abrégé MAO. Ce cocatalyseur est utilisé sous forme de solution.

Le cocatalyseur est tel qu'il est apte à interagir par des interactions de type acide-base de Lewis avec la paroi des nanotubes de carbone, riche en électrons π.

Le catalyseur utilisé à titre d'exemple, le dichlorure de bis (1,2,3,4,5-pentaméthylcyclopentadiényl) zirconium (IV) ou Cp* ₂ZrCl₂, est ensuite ajouté. Il se présente également sous forme de solution.

On notera que le Cp*₂ZrCl₂, au contact de la charge traitée au MAO, donne naissance à une espèce cationique active en polymérisation de l'éthylène et à un contre-ion négatif localisé au niveau de la charge traitée, comme l'illustre la fig. 1b.

Grâce à cette fixation de l'espèce active, l'éthylène polymérise en surface de la charge. Comme le polyéthylène est insoluble dans les solvants utilisés, il se dépose par précipitation directement en surface de la charge (i.e. des nanotubes de carbone).

### Réactifs utilisés :

Les charges utilisées étaient des nanotubes de carbone multi-parois (MWNTs). Deux types de nanotubes ont été utilisés, à savoir les MWNTs bruts contenant encore 30 % en poids d'impuretés catalytiques (principalement de l'alumine environ 30 % en poids, 0,3 % en poids de cobalt et 0,3 % en poids de fer) et les MWNTs purifiés contenant des traces d'impuretés catalytiques (0,2 % en poids d'alumine, 0,3 % en poids de fer et 0,3 % en poids de cobalt). Ces nanotubes ont été fournis par le service du Professeur J. B.Nagy des Facultés Universitaires Notre-Dame de la Paix à Namur.

Le solvant utilisé était le n-heptane (qualité p.a., « pour analyse », société Acros). Il a été séché sur tamis moléculaire de porosité égale à 0,4 nanomètres (fourni également par la société Acros).

Certaines solutions ont été préparées à partir de toluène sec. Pour ce faire, le toluène (p.a.), fourni par la société Labscan, a été séché en le portant à ébullition sur hydrure calcique, puis il a ensuite été fraîchement distillé.

Le cocatalyseur sélectionné était le méthylaluminoxane (MAO), société ATOFINA. Des solutions de MAO dans du toluène entre 3M et 0,2M ont été utilisées pour les synthèses.

Le dichlorure de bis(1,2,3,4,5-pentaméthylcyclopentadiényl) zirconium (IV) (Cp* ₂ZrCl₂) (société Aldrich) a été utilisé ici comme catalyseur. Il a été dissous dans du toluène sec de manière à former des solution entre 1 et 10 mM.

L'éthylène (99,998 %) (société Air Liquide) a été utilisé tel quel, dans son état gazeux.

Du méthanol (grade technique)(société Brenntag) a été utilisé pour précipiter et récupérer le polymère ou le composite.

### Prétraitement des nanotubes de carbone au cocatalyseur :

Les nanotubes bruts (entre 0,25 et 1g) ont été introduits dans un ballon à 2 cols de 250 ml ou de 500 ml (selon l'utilisation ultérieure) contenant un barreau d'agitation magnétique et équipé de robinets à trois voies en verre (obturés d'un septum en caoutchouc).

Le ballon, connecté à un piège à vide plongé dans l'azote liquide afin de récupérer l'eau adsorbée, a été conditionné, c'est-à-dire séché sous vide à la flamme d'un bec Bunsen. Les nanotubes ont ensuite été séchés toute une nuit entre 100 et 150°C sous vide et sous agitation magnétique. Le ballon est mis sous légère surpression d'azote.

100 ml de n-heptane ont ensuite été introduits dans le ballon. Une quantité de MAO (entre 0,001 et 0,01 mol/g de MWNTs) a été préalablement débarrassée de son triméthylaluminium par évaporation à sec sous vide. Le triméthylaluminium évaporé a été condensé dans un piège à vide plongé dans l'azote liquide et conservé pour analyse. Cette élimination du triméthylaluminium (TMA) est nécessaire car il a été démontré que le TMA, excellent acide de Lewis, est un compétiteur efficace du MAO au niveau de l'adsorption [7].

Le MAO solide a été remis en solution dans du toluène et transféré par capillaire, sous azote, sur la suspension de MWNTs dans l'heptane.

Le tout a été thermostatisé entre 20 et 60°C dans un bain d'huile sous agitation magnétique entre 10 min et 2 heures.

Le MAO a été concentré à sec sous vide en présence des MWNTs et les solvants évacués ont été condensés dans un ballon plongé dans l'azote liquide (fraction de traitement de la charge).

La température du bain a ensuite été montée à haute température (entre 100 et 200°C) entre 30 min et 3 heures, tout en laissant le ballon sous vide (10⁻¹ torr) pour fixer le MAO sur les nanotubes de carbone. Le ballon a alors été remis sous légère surpression d'azote.

Puis trois lavages ont été réalisés afin d'éliminer le MAO non fixé à la charge. Pour cela, 80 ml de toluène sec ont été ajoutés aux nanotubes et agités pendant 5 minutes à 60 °C. La charge traitée au MAO a été laissée à décanter en plaçant le mélange hors agitation. Le surnageant a alors été évacué par l'intermédiaire d'un capillaire conditionné et sous flux d'azote. Les trois solutions et la fraction de traitement de la charge (n-heptane) ont ensuite été regroupées.

La faible quantité de toluène résiduelle présente dans le ballon a été entraînée sous vide et concentrée dans un ballon plongé dans l'azote liquide de manière à l'ajouter par la suite à la fraction de traitement de la charge.

A l'issue de ce traitement, le ballon contenait ainsi des nanotubes prétraités.

### Homopolymérisation de l'éthylène en présence de nanotubes de carbone prétraités au cocatalyseur:

On notera que la fixation du catalyseur sur les nanotubes prétraités a été réalisée en milieu inerte, maintenu par une légère surpression en azote en évitant la présence d'impuretés protiques et d'oxygène dans le milieu réactionnel.

Pour effectuer l'homopolymérisation de l'éthylène, 100 ml de n-heptane ont été ajoutés dans le ballon contenant les nanotubes traités au MAO.

L'ensemble a ensuite été transvasé sous atmosphère d'azote dans un ballon-réacteur préalablement conditionné et contenant un barreau d'agitation magnétique.

Entre 1 10⁻⁵ et 1 10⁻⁶ mole de Cp*₂ZrCl₂ par g de nanotubes sont ajoutés, sous atmosphère d'azote. Le ballon réacteur ensuite thermostatisé dans un bain d'huile entre 25 et 100°C (température de polymérisation) entre 5 et 60 minutes.

Le milieu a alors été purgé pendant 30 secondes par un flux d'éthylène. La polymérisation a été effectuée pendant une heure sous une pression entre 1,1 et 2,7 bars en éthylène. Le composite ainsi synthétisé a alors été récupéré en le précipitant dans le méthanol acidifié à l'acide chlorhydrique 12M.

### Description d'une première forme d'exécution préférée de l'invention

### 1. Réactifs utilisés :

Les charges utilisées étaient des nanotubes de carbone multi-parois (MWNTs). Deux types de nanotubes ont été utilisés, à savoir les MWNTs bruts contenant encore 30 % en poids d'impuretés catalytiques (principalement de l'alumine environ 30 % en poids, 0,3 % en poids de cobalt et 0,3 % en poids de fer) et les MWNTs purifiés contenant des traces d'impuretés catalytiques (0,2 % en poids d'alumine, 0,3 % en poids de fer et 0,3 % en poids de cobalt). Ces nanotubes ont été fournis par le service du Professeur J. B.Nagy des Facultés Universitaires Notre-Dame de la Paix à Namur.

Le solvant utilisé était le n-heptane (qualité p.a., « pour analyse », société Acros). Il a été séché sur tamis moléculaire de porosité égale à 0,4 nanomètres (fourni également par la société Acros).

Certaines solutions ont été préparées à partir de toluène sec. Pour ce faire, le toluène (p.a.), fourni par la société Labscan, a été séché en le portant à ébullition sur hydrure calcique, puis il a ensuite été fraîchement distillé.

Le cocatalyseur sélectionné était le méthylaluminoxane (MAO), société ATOFINA. Une solution de MAO dans du toluène à 1,45 M a été utilisée pour la synthèse.

Le dichlorure de bis(1,2,3,4,5-pentaméthylcyclopentadiényl) zirconium (IV) ou Cp*₂ZrCl₂ (société Aldrich) a été utilisé ici comme catalyseur. Il a été dissous dans du toluène sec de manière à former une solution d'environ 5 mM.

L'éthylène ( 99,998 %) (société Air Liquide) a été utilisé tel quel, dans son état gazeux.

Du méthanol (grade technique)(société Brenntag) a été utilisé pour précipiter et récupérer le polymère ou le composite.

### 2. Prétraitement des nanotubes de carbone au cocatalyseur :

Les nanotubes bruts (0,25 g ou 1g selon le cas) ont été introduits dans un ballon à 2 cols de 250 ml ou de 500 ml (selon l'utilisation ultérieure) contenant un barreau d'agitation magnétique et équipé de robinets à trois voies en verre (obturés d'un septum en caoutchouc).

Le ballon, connecté à un piège à vide plongé dans l'azote liquide afin de récupérer l'eau adsorbée, a été conditionné, c'est-à-dire séché sous vide à la flamme d'un bec Bunsen. Les nanotubes ont ensuite été séchés toute une nuit à 100 °C sous vide et sous agitation magnétique. Le ballon est mis sous légère surpression d'azote.

100 ml de n-heptane ont ensuite été introduits dans le ballon. Une quantité de MAO 1,45M en Al (32 ml/gramme de MWNTs ou 46 mmol/gramme de MWNTs) a été préalablement débarrassée de son triméthylaluminium par évaporation à sec sous vide. Le triméthylaluminium évaporé a été condensé dans un piège à vide plongé dans l'azote liquide et conservé pour analyse. Cette élimination du triméthylaluminium (TMA) est nécessaire car il a été démontré que le TMA, excellent acide de Lewis, est un compétiteur efficace du MAO au niveau de l'adsorption [7].

Le MAO solide a été remis en solution dans du toluène et transféré par capillaire, sous azote, sur la suspension de MWNTs dans l'heptane.

Le tout a été thermostatisé à 40 °C dans un bain d'huile sous agitation magnétique pendant une heure.

Le MAO a été concentré à sec sous vide en présence des MWNTs et les solvants évacués ont été condensés dans un ballon plongé dans l'azote liquide (fraction de traitement de la charge).

La température du bain a ensuite été montée à haute température (150 °C) pendant une heure et demie, tout en laissant le ballon sous vide (10⁻¹ torr) pour fixer le MAO sur les nanotubes de carbone. Le ballon a alors été remis sous légère surpression d'azote.

Puis trois lavages ont été réalisés afin d'éliminer le MAO non fixé à la charge. Pour cela, 80 ml de toluène sec ont été ajoutés aux nanotubes et agités pendant 5 minutes à 60 °C. La charge traitée au MAO a été laissée à décanter en plaçant le mélange hors agitation. Le surnageant a alors été évacué par l'intermédiaire d'un capillaire conditionné et sous flux d'azote. Les trois solutions et la fraction de traitement de la charge (n-heptane) ont ensuite été regroupées.

La faible quantité de toluène résiduelle présente dans le ballon a été entraînée sous vide et concentrée dans un ballon plongé dans l'azote liquide de manière à l'ajouter par la suite à la fraction de traitement de la charge.

A l'issue de ce traitement, le ballon contenait ainsi des nanotubes prétraités.

### 3. Homopolymérisation de l'éthylène en présence de nanotubes de carbone prétraités au cocatalyseur:

On notera que fixation du catalyseur sur les nanotubes de carbone prétraités a été réalisée en milieu inerte, maintenu par une légère surpression en azote en évitant la présence d'impuretés protiques et d'oxygène dans le milieu réactionnel.

Pour effectuer l'homopolymérisation de l'éthylène, 100 ml de n-heptane ont été ajoutés dans le ballon contenant les nanotubes traités au MAO (0,25 g).

L'ensemble a ensuite été transvasé dans un ballon-réacteur préalablement conditionné et contenant un barreau d'agitation magnétique.

2,2 ml de la solution de Cp*₂ZrCl₂ 5 mM (11,5 µmol pour les 0,25 g de nanotubes). Le ballon réacteur ensuite thermostatisé dans un bain d'huile à 50 °C (température de polymérisation) pendant 15 minutes.

Le milieu a alors été purgé pendant 30 secondes par un flux d'éthylène. La polymérisation a été effectuée pendant une heure sous une pression de 2,7 bars en éthylène. Le composite ainsi synthétisé a alors été récupéré en le précipitant dans le méthanol acidifié à l'acide chlorhydrique 12M.

### 4. Résultats

### 4.1. Absence d'activité catalytique associée aux nanotubes de carbone seuls:

On notera que pour les besoins du test, le temps de polymérisation a été réduit de 60 à 30 minutes.

Il a été mis en évidence que les nanotubes de carbone bruts ne présentaient pas d'activité catalytique en polymérisation de l'éthylène.

Pour cela, des réactions de polymérisation ont été réalisées dans différentes conditions correspondant à différents échantillons et les résultats obtenus sont présentés au tableau 1.

Ainsi que le montre ce tableau 1, lorsque la polymérisation est réalisée en absence du cocatalyseur MAO (voir les échantillons 24b et 28a), on n'obtient pas de polymère, alors qu'une faible quantité de polyéthylène était obtenue en présence de MAO (voir échantillon Dabo 24a).

Il a été vérifié que le produit obtenu en présence de MAO était bien du polyéthylène (données non présentées ici).

### 4.2. Absence d'effet poison au niveau des nanotubes de carbone vis-à-vis du couple catalytique:

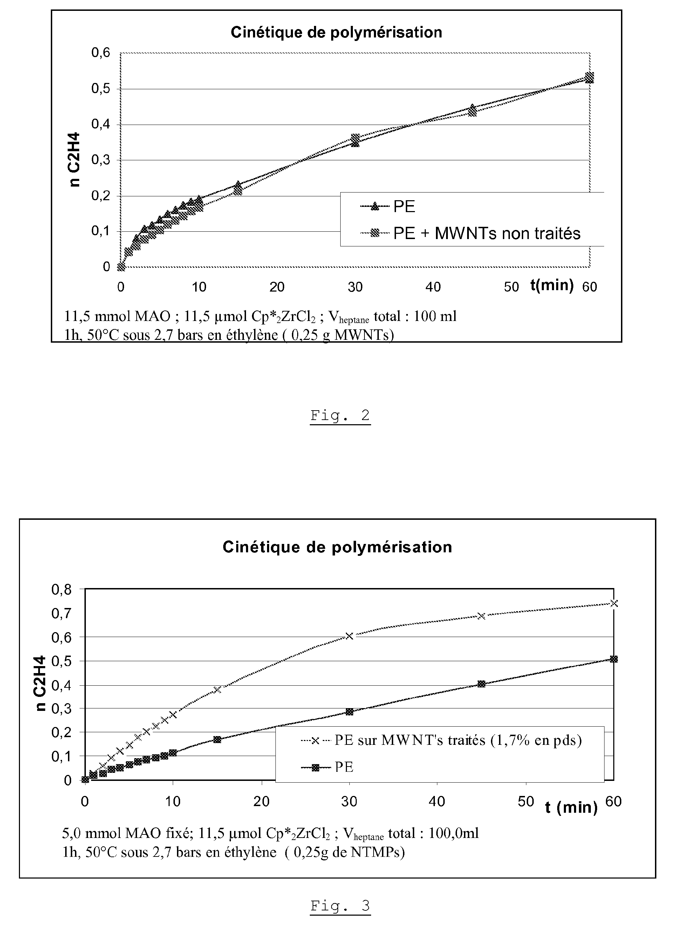

Des tests, dont les résultats sont présentés au tableau 2 et à la figure 2 ont permis de mettre en évidence que les nanotubes multi-parois bruts ne constituaient pas un poison pour le couple catalytique MAO/Cp*₂ZrCl₂.

En effet, si on compare la consommation en éthylène au cours du temps pour une polymérisation réalisée en absence et en présence de nanotubes de carbone multi-parois bruts non prétraités, on observe que l'activité catalytique est identique dans les deux cas (voir tableau 2) et que les courbes de consommation de l'éthylène sont quasiment superposées dans les deux cas (voir figure 2).

On notera que l'activité catalytique est définie comme la quantité en kg de polyéthylène (PE) produite par mole de Zr et par heure.

### 4.3. Utilisation des nanotubes de carbone comme support de catalyse en polymérisation de l'éthylène :

De façon tout à fait surprenante, il a été mis en évidence selon la présente invention que les nanotubes de carbone pouvaient être utilisés comme support de catalyse pour le couple MAO/Cp*₂ZrCl₂ en polymérisation de l'éthylène.

Ce résultat est d'autant plus surprenant que l'homme de métier sachant l'abondance d'électrons π sur les nanotubes de carbone, ce qui en fait des bases de Lewis efficaces et donc théoriquement capables d'entrer en compétition avec les monomères oléfiniques comme l'éthylène, ce serait au contraire attendu à une désactivation voire une inhibition de la polymérisation.

Pour cela, des tests de polymérisation en présence et en absence de nanotubes de carbone multi-parois bruts prétraités ont été réalisés et les résultats de ces tests sont présentés au tableau 3 et à la figure 3.

Ainsi que le montre le tableau 3, on observe une augmentation de 50% de l'activité catalytique pour l'échantillon Dabo21, correspondant à une polymérisation en présence de nanotubes prétraités comparativement à celle obtenue pour l'échantillon Dabo23 (en absence desdits nanotubes). Cela signifie que le système catalytique formé par le couple catalytique cocatalyseur/catalyseur supporté par des nanotubes de carbone présente une activité catalytique en polymérisation de l'éthylène supérieure à celle du couple seul.

La comparaison des cinétiques de polymérisation telle que présentée à la figure 3 confirme ces résultats.

### 4.4. Caractérisation thermique des composites PE/MWNTs bruts :

Des composites à taux croissant de polyéthylène ont été synthétisés en prélevant différentes fractions en cours de polymérisation et l'évolution de la température de fusion et celle du taux de cristallinité en cours de polymérisation ont été mesurées à partir de ces différents composites par calorimétrie à balayage différentiel (DSC) et par analyse thermogravimétrique (TGA).

Les résultats correspondants sont présentés au tableau 4. Comme le montrent ces résultats, on observe une augmentation de la température de fusion au fur et à mesure que le taux de polyéthylène synthétisé augmente, tandis que le taux de cristallinité augmente lui aussi jusqu'à atteindre une valeur seuil (66%).

Ces résultats mettent en évidence la formation de composites avec un taux croissant de polyéthylène. De plus, les propriétés thermiques de ces composites augmentent avec le taux de polyéthylène qu'ils contiennent.

### 4.5. Caractérisation morphologique des composites PE/MWNTs bruts :

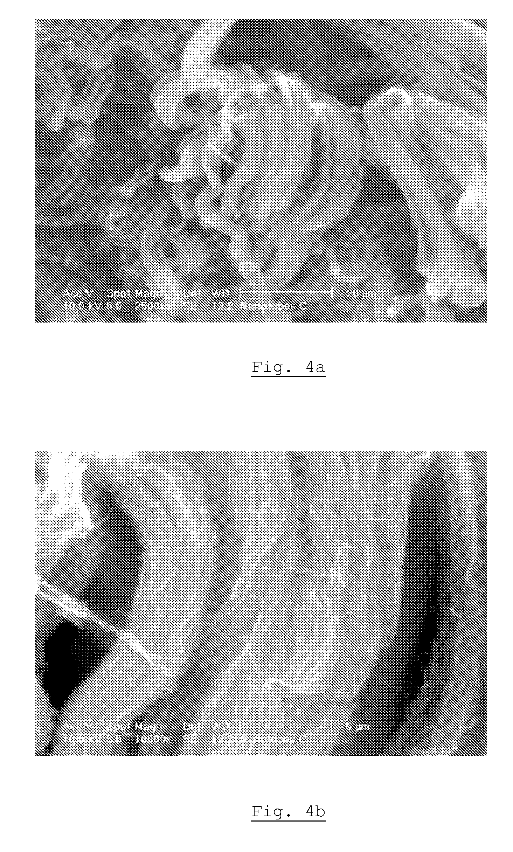

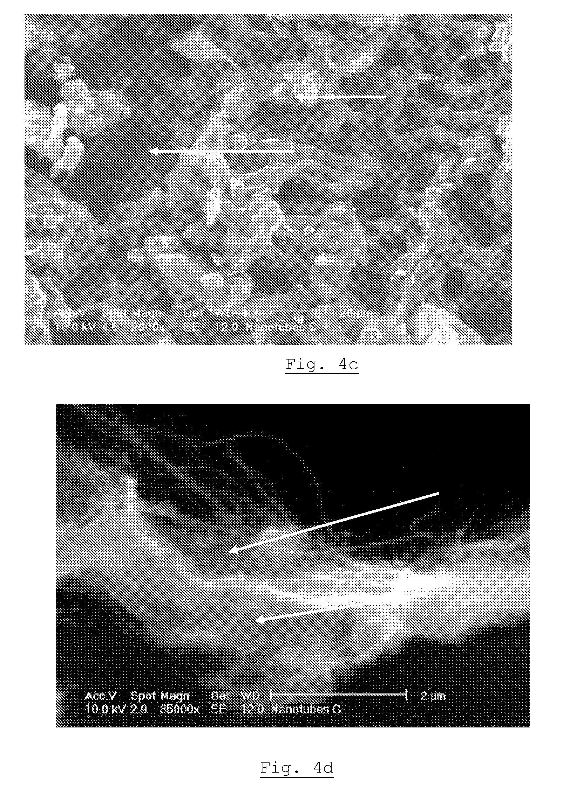

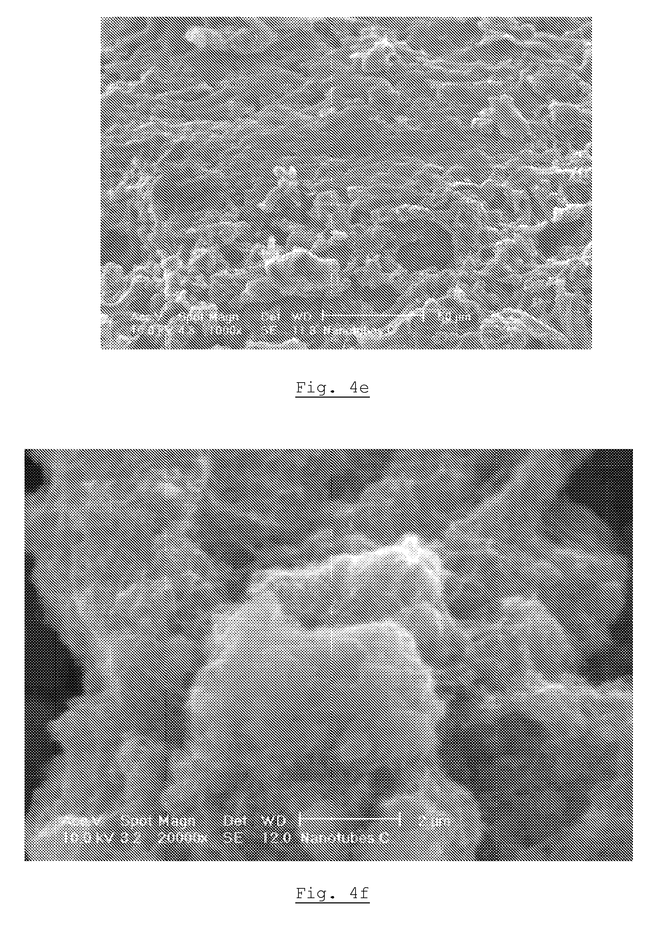

Les figures 4a à 4f présentent des microphotographies SEM obtenues pour différents composites PE/MWNTs bruts comprenant des teneurs en poids de polyéthylène variables par rapport aux nanotubes de carbone et allant de 0% à 42%.

Dans un échantillon ne contenant que des nanotubes de carbone, on observe ainsi que présenté aux figures 4a et 4b, selon un phénomène bien connu de l'homme de l'art, que ces nanotubes de carbone ont tendance naturellement et spontanément à s'agréger sous forme de paquets, pelotes ou fagots. Ces fagots sont repérés par une flèche.

En utilisant cet échantillon comme point de comparaison, on constate qu'au fur et à mesure que la teneur en poids de polyéthylène synthétisé dans le composite augmente, ces fagots tendent de plus en plus à se désagréger (figures 4c à 4f).

On notera que des analyses morphologiques complémentaires effectuées par microscopie électronique à balayage (SEM) (non présentées ici) ont confirmé cette tendance à la destructuration des "fagots" de nanotubes de carbone pour des taux de 50 à 75 % en poids de polyéthylène.

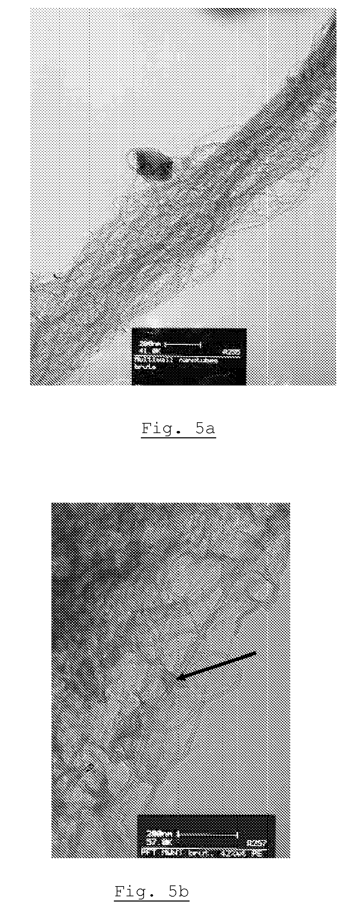

Afin de visualiser l'enrobage des nanotubes, différents échantillons ont été analysés en microscopie électronique par transmission (TEM), ces échantillons contenant 0%, 42 % et 74 % en poids de polyéthylène. Les photographies obtenues pour ces différents échantillons sont présentées aux figures 5a à 5c.

Ainsi que l'on peut le constater, pour l'échantillon correspondant à des nanotubes MWNTs bruts sans polyéthylène, on observe des "fagots" de nanotubes de carbone (voir figure 5a). Ceux-ci contiennent des nanotubes de différents diamètres allant d'une dizaine à une quarantaine de nanomètres. Leur longueur est de plusieurs micromètres. On notera que l'objet visible au centre de la photo pourrait être assimilé à une particule de catalyseur (contenant du cobalt et du fer) utilisé pour la production des nanotubes.

En revanche, pour un échantillon correspondant à des nanotubes bruts contenant 42 % en poids de polyéthylène (figure 5b), on observe sur les bords de l'échantillon, un enrobage partiel des nanotubes de carbone (voir flèche sur la figure 5b) par le polyéthylène.

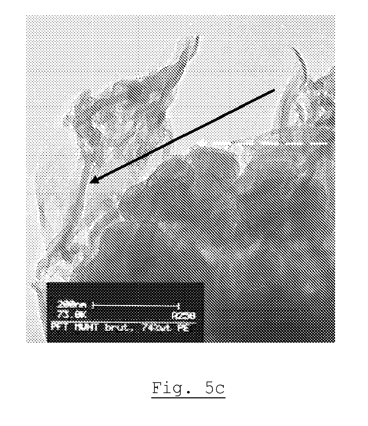

Comparativement, comme le montre la figure 5c, la proportion des nanotubes bruts enrobés (gainés) par le polyéthylène augmente pour un échantillon contenant une proportion plus grande de polyéthylène (nanotubes bruts contenant 74 % en poids de polyéthylène). Sur cette figure, les nanotubes enrobés sont repérés par une flèche noire, tandis que les zones très riches en polyéthylène sont repérées par une flèche pointillée. Cet enrobage est surtout visible sur les bords de l'échantillon.

### 4.6. Effet de la purification des nanotubes de carbone sur les composites PE/MWNTs obtenus:

Une mesure des activités catalytiques similaire à celle décrite plus haut pour des nanotubes de carbone bruts a été réalisée avec des nanotubes de carbone purifiés (données non présentées).

Cette étude a permis de mettre en évidence que le système catalytique dans lequel le support est constitué de nanotubes de carbone purifiés est tout aussi performant en terme d'activité catalytique que celui dans lequel le support est constitué de nanotubes de carbone bruts.

De façon similaire à l'étude présentée ci-dessus pour des composites dans lesquels les nanotubes multi-parois étaient bruts, une étude a été menée sur des composites PE/nanotubes de paroi (MWNTs) dans lesquels les nanotubes de carbone avaient été purifiés.

Les résultats obtenus (non présentés ici) ont mis en évidence que les propriétés thermiques et les caractéristiques morphologiques de ces composites PE/ nanotubes de carbone multi-parois obtenues avec des nanotubes de carbone purifiés étaient comparables à celles obtenues avec des nanotubes de carbone bruts.

En outre, ces résultats ont permis de montrer qu'il fallait moins de polyéthylène pour déstructurer les "fagots" de nanotubes de carbone lorsqu'ils sont purifiés que lorsqu'ils sont bruts. Cela peut s'expliquer par le fait que la purification des nanotubes de carbone diminue leur structuration en fagot. En effet, la purification permet d'éliminer les résidus catalytiques se trouvant à la base des "fagots" et qui assurent en partie leur cohésion.

### 4.7. Utilisation des composites PE/nanotubes MWNTs comme mélange-maîtres pour préparer des composites :

Afin de pouvoir déterminer l'apport de la polymérisation de l'éthylène sur les nanotubes de carbone multi-parois bruts traités au MAO selon la présente invention, des mélanges à l'état fondu ont été réalisés.

Pour que ces mélanges soient comparables, il fallait que la matrice soit identique. Pour ce faire, une matrice HDPE (société DOW) avec un indice de fluidité à chaud en masse de 1,1 g/10 min sous 2,16 kg et 190° a été utilisée.

La préparation de ces mélanges avec cette matrice a été réalisée par malaxage en chambre interne fermée (Brabender) suivi d'une mise en forme du matériau ainsi obtenu par compression dans un moule.

Plus précisément, dans le malaxeur en chambre fermée, on a fait fondre et on a mélangé la matrice polymère et la charge (les nanotubes de carbone gainés par le polyéthylène). Une fois ce matériau fondu et bien mélangé, il a été transféré dans un moule adéquat en acier inoxydable dont la surface est recouverte d'un film en téflon. Le tout a été ensuite pressé à chaud (pour bien prendre la forme du moule), puis à froid (pour figer le matériau) par l'intermédiaire d'une presse hydraulique. On a obtenu ainsi des plaques de composite de trois millimètres d'épaisseur.

Le malaxeur utilisé ici était un mélangeur interne Brabender (∼ 70 g de polymère) et la presse une double presse hydraulique chaud/froid Agila PE20. Le mélange a été effectué à 190 °C (vitesse des vis : 45 tours/min) pendant une durée de 2 minutes pour fondre et mélanger le HDPE seul et ensuite pendant 10 minutes pour le mélange avec la charge. La procédure pour le pressage était la suivante : 3 minutes à basse pression et à 190 °C, 3 minutes à 150 bars et à 190 °C et enfin 5 minutes à froid sous une pression de 150 bars.

Trois mélanges ont été ainsi réalisés par malaxage en chambre interne. Il s'agit de la matrice HDPE seule (échantillon Dabo 40a), de la matrice HDPE contenant 2 % en poids de MWNTs bruts non prétraités au préalable au MAO (échantillon Dabo 40b) et de la matrice contenant 2 % en poids de MWNTs bruts traités au MAO et enrobés par polymérisation *in situ* de l'éthylène, utilisés sous la forme de mélange-maître ("masterbatch") (échantillon Dabo 40c). Ce "masterbatch" est en fait obtenu par rassemblement de plusieurs échantillons issus de la polymérisation de l'éthylène sur les nanotubes de carbone multi-parois bruts traités au MAO selon le procédé de l'invention et ayant fait l'objet de prélèvements en cours de polymérisation. Dans ce "masterbatch", le taux en polyéthylène généré in *situ* selon le procédé de l'invention est de l'ordre de 70 % en poids par rapport à la quantité de MWNTs bruts.

### 4.7.1. Propriétés mécaniques et viscoélastiques

Sur chacun des mélanges, les propriétés mécaniques ont été déterminées par des tests de traction et moyennés sur un minimum de 5 éprouvettes. La vitesse de traction était de 50 mm/min. De plus, les propriétés viscoélastiques ont aussi été déterminées par l'intermédiaire d'un "Melt Flow Indexer" (MFI).

Les résultats obtenus sont repris dans le tableau 5.

Les paramètres repris dans ce tableau sont bien connu de l'homme de l'art. Pour rappel, on définit dans ce tableau les paramètres mécaniques d'un échantillon de la façon suivante :
- le module de Young (E) est la caractéristique de la résistance initiale à la déformation du matériau (rigidité) ;
- la « contrainte au point yield » et la « déformation au point yield » correspondent respectivement à la valeur de la contrainte et à la valeur de l'élongation au seuil d'écoulement (σₛ, εₛ);
- le "MFI" caractérise la viscosité du matériau à l'état fondu.

Les résultats du tableau 5 montrent que l'ajout de nanotubes n'influe pas significativement sur la rigidité de la matrice HDPE (voir 3ème colonne du tableau 5, « module de Young »).

En revanche, l'ajout de ces nanotubes s'accompagne d'une diminution de la déformation à la rupture (deuxième colonne du tableau 5).

Néanmoins, l'utilisation du "masterbatch" permet de conserver des propriétés ultimes telles que la contrainte et la déformation à la rupture relativement élevées et caractéristiques du maintien de la ductilité du matériau (comparaison entre les échantillons Dabo 40b et Dabo 40c).

En ce qui concerne les propriétés viscoélastiques (dernière colonne du tableau 5, « MFI »), l'ajout de nanotubes de carbone MWNTs diminue fortement le MFI, c'est-à-dire que l'ajout des nanotubes de carbone tend à augmenter la viscosité à l'état fondu du matériau.

Cependant, par comparaison, le prétraitement par la polymérisation de l'éthylène sur des nanotubes traités au MAO selon le procédé de l'invention conduit à une diminution moins importante du facteur MFI, c'est-à-dire que l'augmentation de la viscosité à l'état fondu est moins forte qu'avec un simple mélange (Dabo 40b). Ceci peut s'expliquer par le fait que le procédé selon l'invention permet une meilleure dispersion des nanotubes de carbone et donc une valeur du facteur MFI relativement plus élevé par rapport au simple mélange. La meilleure dispersion des MWNTs et donc la déstructuration des "fagots" sont vraisemblablement à l'origine de cette augmentation de viscosité dans le fondu, augmentant l'écoulement de la matrice au travers de la filière normée.

En conclusion, le prétraitement des nanotubes de carbone par la polymérisation de l'éthylène sur les nanotubes traités au MAO selon l'invention permet d'améliorer les propriétés mécaniques du composite obtenu dans la mesure où il permet un meilleur compromis entre la rigidité et la ductilité du matériau, tout en maintenant une viscosité adaptée en vue de la mise en oeuvre du matériau.

### 4.7.2. Propriétés thermiques

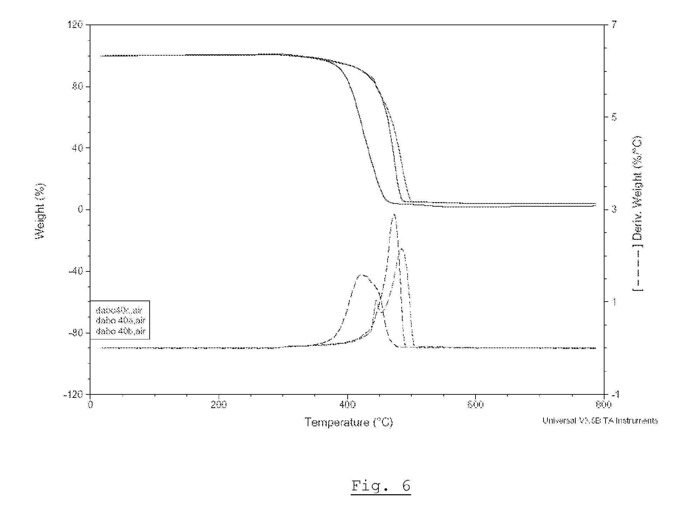

Des analyses thermiques, par calorimétrie différentielle à balayage (DSC) et par analyse thermogravimétrique (TGA), ont été effectuées et comparées pour les différents mélanges. Les données obtenues sont reprises dans le tableau 6 et sur la figure 6.

Ces données mettent en évidence que la température de fusion est légèrement plus élevée pour les composites que pour la matrice seule (première colonne, « T_{fus} » du tableau 6).

Une donnée très intéressante est le fait que pour le composite contenant les nanotubes préalablement traités au MAO et enrobés de polyéthylène selon le procédé de l'invention (échantillon Dabo 40c) le gain de stabilité thermique est encore meilleur que pour le simple mélange.

On constate aussi de manière très intéressante qu'en présence de MWNTs bruts (entrées Dabo 40b et Dabo 40c), la température de dégradation sous atmosphère oxydante (sous air) de la matrice HDPE est nettement plus élevée (de l'ordre de 50 °C) par rapport à celle de la matrice HDPE seule (échantillon Dabo 40a)(colonne « T_{dég}. sous air ») . Cela est clairement mis en évidence sur les thermogrammes de la figure 6.

En d'autres termes, si le simple mélange de nanotubes de carbone à la matrice HDPE permet d'améliorer la stabilité de la matrice HDPE, il ressort de la présente invention que la présence de nanotubes de carbone, même en quantité aussi faible que 2 % en poids, qui ont subi le traitement selon le procédé l'invention, permet d'améliorer encore davantage cette stabilité thermique.

### 4.7.3. Comportement au feu

Le test effectué a consisté à brûler un échantillon et à observer le comportement du matériau en cours de combustion : formation éventuelle de gouttes enflammées capables de propager le feu au milieu environnant, déformation du matériau, volatilisation intensive, ....

Lorsque l'on a enflammé l'échantillon correspondant à la matrice HDPE seule (Dabo 40a), celui-ci a brûlé en générant des gouttes enflammées. La propagation de la flamme le long de l'échantillon a été rapide conduisant à la combustion intégrale de l'échantillon initial.

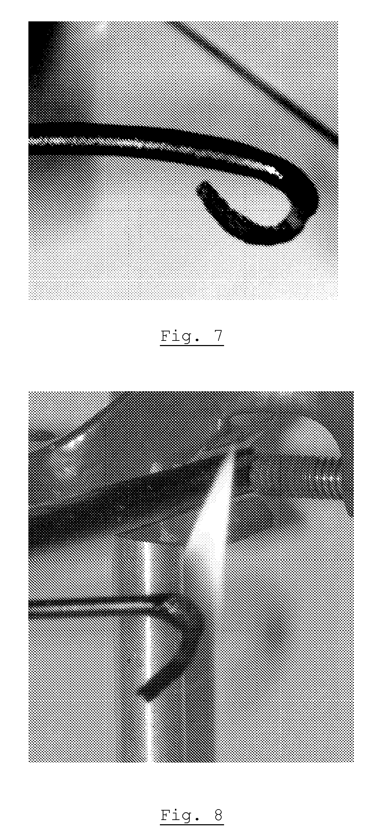

Comparativement, la combustion de l'échantillon correspondant à un composite avec une matrice HDPE contenant 2 % en poids de MWNTs bruts obtenu par simple mélange (Dabo40b), il ne s'est plus formé la moindre goutte enflammée. La propagation de la flamme était plus lente que dans le cas de la matrice HDPE seule. Après combustion, l'échantillon bien que déformé, comme le montre la figure 7, a globalement conservé ses dimensions initiales. Cette observation est typique du phénomène dénommé « charring » résultant de la carbonisation de la matrice organique induite par la présence de nanocharges et aboutissant à la formation d'une croûte carbonée (« char » en anglais).

Le traitement des nanotubes de carbone selon l'invention, ne permet pas a priori d'améliorer davantage le comportement au feu de la matrice HDPE, comme en témoigne la figure 8 (échantillon Dabo 40c), comparativement à des nanotubes de carbone non traité selon ce procédé (échantillon Dabo40b).

Néanmoins, le comportement de ce composite avec une matrice HDPE contenant 2 % en poids de MWNTs bruts traités selon le procédé de l'invention semble meilleur que celui de la matrice seule. On observe, comme dans le cas du composite contenant des nantotubes de carbone non traités la formation d'une croûte (« char ») en absence totale d'écoulement enflammé (voir la figure 8).

En conclusion, l'incorporation de nanotubes de carbone traités selon le procédé de l'invention dans une matrice HDPE permet au composite formé de brûler sans formation de gouttes enflammées et avec une vitesse de propagation beaucoup plus lente par rapport à la matrice HDPE seule. Néanmoins *a priori,* il ne semble pas y avoir cependant de différence significative au niveau du comportement au feu entre les composites obtenus par simple mélange mécanique de HDPE et de nanotubes MWNTs bruts et ceux obtenus par mélange de HDPE et de MWNTs traités selon le procédé de l'invention.

### 4.7.4. Caractérisations morphologiques

De manière à visualiser l'état de désagrégation des nanotubes de carbone, des caractérisations morphologiques par microscopie électronique par transmission (TEM) ont été effectuées sur les deux composites Dabo 40b et Dabo 40c obtenus respectivement par mélange de HDPE et de MWNTs bruts d'une part et d'autre part par mélange de HDPE et de MWNTs traités selon le procédé de l'invention. Les photos correspondantes sont présentées aux figures respectivement 9a,9b et 10a,10b.

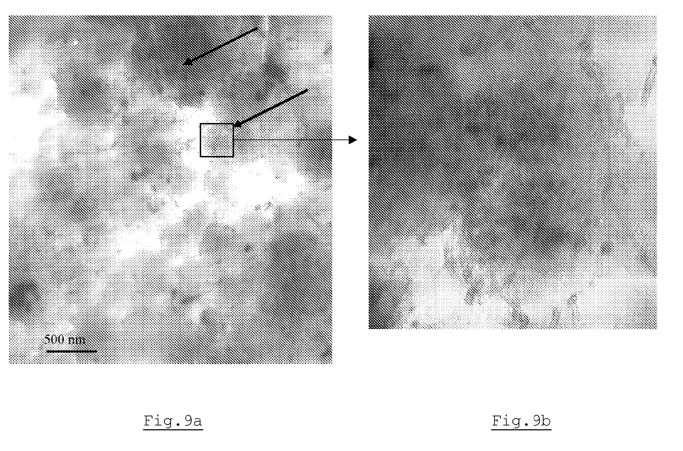

Il apparaît que le mélange à l'état fondu des MWNTs bruts avec du HDPE (composite Dabo 40b) n'est pas assez efficace pour désagréger les "fagots" de nanotubes. En effet, sur les figures 9a et 9b de ce composite, des "fagots" de nanotubes sont observables (voir flèches et agrandissement).

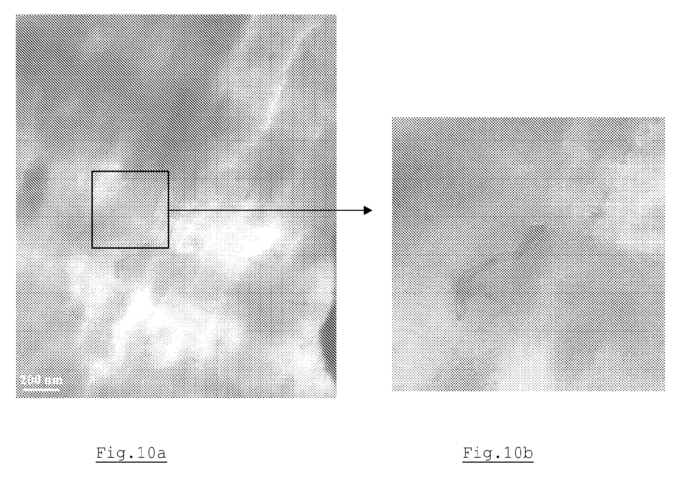

Par comparaison, l'analyse morphologique effectuée par microscopie électronique en transmission (TEM) sur le composite Dabo 40c contenant les nanotubes de carbone traités selon le procédé de l'invention, révèle une meilleure dispersion des nanotubes de carbone au sein de la matrice (voir figures 10a et 10b), puisque les "fagots" de nanotubes ne sont plus observables. On aperçoit au contraire des nanotubes de carbone relativement séparés les uns des autres (voir figure 10a). La dispersion des nanotubes apparaît relativement homogène dans tout l'échantillon.

En conclusion, les observations réalisées par microscopie électronique par transmission (TEM) mettent en évidence l'intérêt du procédé de l'invention qui permet, grâce à l'enrobage des nanotubes de carbone, la désagrégation des "fagots" qu'ils ont tendance naturellement à former, et de ce fait la dispersion relativement homogène de ces nanotubes dans une matrice polyéthylène par mélange dans le fondu. On peut donc réellement considérer que l'ajout du mélange maître au sein de la matrice HDPE aboutit donc à la formation d'un nanocomposite au sens strict du terme.

Au contraire, le mélange à l'état fondu des nanotubes de carbone non traités et de HDPE ne conduit pas à l'obtention d'un nanocomposite, mais à l'obtention d'un microcomposite pour lequel on retrouve des "fagots" de nanotubes dans le polyéthylène.

### Description d'une seconde forme d'exécution préférée de l'invention

Des nanocomposites à base de polyéthylène et comprenant comme charges des nanotubes de carbones double-paroi (DWNTs) ont également été préparés selon le procédé de la présente invention. Les conditions expérimentales étaient les suivantes.

0,8 grammes de DWNTs ont été séchés une nuit sous pression réduite à 105 °C. La solution de MAO débarrassée du TMA (46,5 ml d'une solution 0,8 M en aluminium) a été ajoutée aux nanotubes. Après élimination des solvants afin de favoriser la fixation du MAO sur les nanotubes de carbone, le mélange a été chauffé à 150 °C pendant 90 minutes. Le MAO non fixé a été éliminé par lavage au toluène sec et a été titré pour déterminer la quantité de MAO fixée (24,6 mmol fixé). Aux DWNTs traités au MAO, on a ajouté 200 ml de n-heptane et 18,4 µmol de Cp*₂ Zr Cl₂. La polymérisation a été effectuée sous une pression de 1,1 bars en éthylène et à 50 °C. Différentes fractions échantillons de composites (nanocomposites) ont été prélevées en cours de synthèse du polyéthylène et précipitées dans le méthanol acidifié pour analyse. Préalablement à l'analyse, les nanocomposites, avec un taux croissant en polyéthylène, ont été séchés à 150°C pendant 90 minutes sous vide.

Une analyse en DSC dans des capsules fermées a ensuite été réalisée et a démontré que la température de fusion ainsi que le taux de cristallinité augmentaient avec le taux de polyéthylène dans le nanocomposite (données non présentées) .

Une analyse des nanocomposites par TGA a également été réalisée et a confirmé les résultats obtenus par DSC et que l'on obtenait bien des nanocomposites avec un taux croissant en polyéthylène quand le temps de prélèvement augmentait (données non présentées).

### Description d'une troisième forme d'exécution préférée

Dans une troisième forme préférée d'exécution, des nanocomposites à base de polyéthylène et comprenant comme charges des nanotubes de carbones simple paroi (SWNTs) ont été préparés selon le procédé de la présente invention. Les conditions expérimentales étaient les mêmes que celles décrites dans la première forme d'exécution pour des nanotubes de type MWNTs.

Une comparaison des résultats obtenus pour le composite ainsi produit selon le procédé de l'invention avec ceux obtenus pour un polymère obtenu par simple polymérisation de l'éthylène est présentée dans le tableau 7.

Ainsi qu'illustré dans ce tableau 7, comparativement à une simple polymérisation en absence de nanotubes, le procédé de la présente invention utilisant comme charges des nanotubes de carbone de type SWNTs permet d'augmenter l'activité catalytique de la polymérisation.

En outre, une étude comparative des cinétiques de polymérisation pour une simple polymérisation et pour une polymérisation en présence de nanotubes de type SWNTs selon le procédé de l'invention ainsi que décrite ci-dessus a démontré que ces cinétiques étaient comparables pendant les vingt premières minutes, mais qu'ensuite la vitesse de la simple polymérisation commence à s'atténuer tandis que la vitesse de la polymérisation selon l'invention continue à augmenter (voir figure 11).

Une analyse thermique de deux échantillons obtenus par simple polymérisation (Dabo B 013a) et par polymérisation sur nanotubes SWNTs selon l'invention (composite Dabo B 012) a également été réalisée et les résultats sont présentés dans le tableau 9.

Il ressort de cette analyse que le polymère seul obtenu par simple polymérisation a une température de fusion plus basse que celle du composite obtenu selon l'invention mais que son taux de cristallinité est plus élevé.

Une étude thermique de nanocomposites à base de polyéthylène comprenant des nanotubes de carbone de type SWNTs et obtenus selon l'invention avec un taux croissant de polyéthylène a été effectuée dont les résultats, présentés dans le tableau 8, ont permis de mettre en évidence que les produits obtenus pour un temps de prélèvement croissant correspondaient bien à des composites avec un taux croissant en polyéthylène et que pour une quantité croissante de polyéthylène formé une augmentation de la température de fusion et une augmentation du taux de cristallinité pouvaient être observées.

### Description d'une quatrième forme préférée d'exécution

Un matériau composite a été préparé selon le procédé de l'invention décrit en détail dans la première forme d'exécution mais avec quelques différences. Une quantité minimale de MAO de 1.23 mmol a été utilisée, des expériences préalables ayant démontré qu'il y avait toujours polymérisation de l'éthylène sur les nanotubes de carbone avec cette quantité de MAO. En outre, l'étape d'élimination du TMA et les étapes de lavage des nanotubes de carbone après les avoir chauffés à 150°C ont été supprimées. De plus, 1 g de MWNTs ont été traités avec 4.9 mmol en aluminium de MAO et en utilisant 40 ml de n-heptane.

Pour l'homopolymérisation de l'éthylène, 175 ml de n-heptane et 16,4 µmol de Cp*₂ZrCl₂ ont été utilisés.

Dans le but de l'utiliser comme « masterbatch », le composite ainsi obtenu a été soumis à des analyses thermogravimétriques. Les analyses ont révélé que la composition du composite était la suivante :
- 39,7 % en poids de polyéthylène (obtenu par TGA sous hélium 20°C/min.)
- 5,8 % en poids d'alumine (obtenu par TGA sous air 20°C/min.)
- 54,5 % en poids de MWNTs (déterminé par soustraction en connaissant la quantité de polyéthylène et d'alumine)

Il a été vérifié que du polyéthylène (PE) avait bien été synthétisé (par analyse calorimétrique à balayage différentiel (DSC)) : la température de fusion caractéristique du PE mesurée était de 134,4 °C (déterminé lors du second passage en DSC cyclique (10 °C/min)) et le taux de cristallinité de 51 % (calculé à partir de l'enthalpie de fusion lors du second passage en DSC cyclique).

Ce masterbatch ainsi obtenu a été redispersé par extrusion/injection dans une matrice haute densité (HDPE) de type commercial (société Dow, de MI₂ = 1,1g/10 min ) de manière à obtenir un nouveau composite. Les conditions expérimentales étaient les suivantes :
- température de mise en oeuvre : 190°
- période d'admission : 4 minutes à 30 rpms
- période de recirculation : 6 minutes à 60 rpms
- récupération : 2 minutes à 60 rpms
- température de la chambre d'injection : 190°C
- température d'injection (moule) : 100°C (chaque mise en oeuvre aboutit à l'obtention de deux éprouvettes de traction) .

Parallèlement ont été préparées des éprouvettes qui contenaient soit du polyéthylène seul et soit des composites obtenus par simple mélange direct et comprenant du polyéthylène et 1% en poids de nanotubes de carbone multi-parois (MWNTs).

De plus, un « masterbatch » à base de MWNTs a été synthétisé et sa composition a également été déterminée comme étant de 39,7 % en poids de polyéthylène ; 5,8 % en poids d'alumine et 54,5 % en poids de MWNTs.

Les trois types d'échantillons ont ensuite été soumis à des tests de traction avec une vitesse de traction de 50 mm/min et les résultats sont présentés ci-dessous.

### Contrainte et élongation à la rupture:

Comme l'illustrent les figures 12 et 13, les propriétés ultimes (contrainte à la rupture et élongation à la rupture) sont bien meilleures pour le composite obtenu par redispersion du masterbatch selon l'invention, que pour le polyéthylène seul et le composite obtenu par mélange direct.

### Module de Young:

La figure 14 montre que les modules de Young des différents matériaux obtenus lors de l'injection sont dans la même gamme de valeurs et que ces valeurs sont situées dans les erreurs relatives de mesure pour chacun des matériaux.

### Contrainte et élongation au point Yield :

Les mêmes observations ont été faites pour les valeurs obtenues de contrainte au point Yield (figure 15) et d'élongation au point Yield (figure 16).

En conclusion, les résultats obtenus démontrent que l'utilisation d'un composite à base d'une matrice polymère et comprenant comme charge des nanotubes de carbone obtenu selon l'invention et utilisé comme mélange-maître permet d'augmenter les propriétés ultimes surtout par rapport à un polymère seulmais aussi par rapport à un composite obtenu par mélange direct dudit polymère et de ladite charge. En d'autres termes, le procédé selon l'invention permet d'obtenir des nanocomposites dans lesquels il existe un transfert des propriétés ultimes des nanotubes de carbone au composite, comme souhaité.

Des tests complémentaires devraient permettre de démontrer que ce transfert des propriétés des nanotubes de carbone au composite concerne également d'autres propriétés physiques.

### TABLEAUX

**Tableau 1**

| **Echan -tillon** | **Cp*₂ZrCl₂ (µmole)** | **MAO (mmol)** | **Masse en MWNTs bruts engagés (g)** | **Masse totale obtenue (g)** | **Poids max. de PE obtenu (g)** | **T_{fus} (°C)** | **Taux de cristallinité du PE (% en poids)** |
|---|---|---|---|---|---|---|---|
| **24a** | 0 | *11,5* | 0,1 | 0,240 | *0,140* | 128,3 | 18 |
| **24 b** | 11,5 | **0** | 0,1 | 0,100 | **0** | / | / |
| **28a** | 0 | **0** | 0,1 | 0,100 | **0** | / | / |
| **28b** | 0 | *11,5* | 0 | 0,038 | *0,038* | 131,0 | 25 |

| | | | | | | | |
|---|---|---|---|---|---|---|---|
| Résultats obtenus lors des différents tests de polymérisation de l'éthylène à partir des MWNTs bruts (2,7 bars en éthylène, 50 °C, 30 min.). | | | | | | | |

**Tableau 2**

| **Echantillon** | **Al/Zr (mol/mol)** | **m_{MWNTs bruts} (g)** | **m_{composites} (g)** | **m_{PE} (g)** | **Activité (kg/mol_{zr}.h)** | **MWNTs bruts obtenus par pesée (% en poids)** |
|---|---|---|---|---|---|---|
| **16** | 1000 | 0,25 | 10,21 | 9,96 | **866** | 2,5 |
| **11** | 1000 | 0 | / | 9,90 | **861** | 0 |

**Tableau 3**

| **Echan Tillon** | **Al/Zr (mol/mol)** | **m_{MWNTs bruts} (g)** | **m_{composites} (g)** | **m_{PE} (g)** | **Activité (kg/mol_{zr}.h)** | **MWNTs bruts obtenus par pesée (% en poids)** |
|---|---|---|---|---|---|---|
| **21¹** | 450 | 0,25 | 14,37 | 14,12 | **1228** | 2,5 |
| **23¹** | 450 | 0 | / | 9,79 | **851** | / |

| | | | | | | |
|---|---|---|---|---|---|---|
| N.b. : ¹11,5 µmol Cp*₂ZrCl₂ Vₕₑₚₜₐₙₑ total : 100 ml 1h, 50°C sous 2,7 bars en éthylène (0,25 g MWNTs) | | | | | | |

**Tableau 4**

| **Temps de Prélèvement ^{a}** | **Volume prélevé (ml)** | **Poids obtenu (g)** | **T_{fus} (°C)^{c}** | **W_{c} PE (seul)^{b,c} (%)** | **Taux de PE^{d} (% en poids)** |
|---|---|---|---|---|---|
| **t₁(Dabo 30 a)** | 38 | 0,388 | 130,9 | 45 | 42 |
| **t₂ (Dabo 30 b)** | 40 | 0,637 | 132,1 | 60 | 57,5 |
| **t₃ (Dabo 30 c)** | 39 | 0,769 | 132,8 | 68 | 71,2 |
| **t₄ (Dabo 30 d)** | 50 | 1,419 | 132,9 | 66 | 73,7 |
| **t₅ (Dabo 30 e)** | 39 | 1,577 | 133,1 | 66 | 78,3 |

| | | | | | |
|---|---|---|---|---|---|
| N.b. : P_{éthyléne} = 1,1 bars ; T = 50 °C ; 1g MWNTs/ 200 ml n-heptane ; 46 µmol Zr / g MWNTs ; Al/Zr = 240 ^{a} Temps écoulé entre chaque prélèvement : 1 à 2 minutes. ^{b} Taux de cristallinité calculé pour la matrice PE après soustraction du taux de chargement déterminé par TGA. ^{c} Valeurs obtenues lors du second passage en DSC. ^{d} Valeurs obtenues par TGA sous hélium. | | | | | |

**Tableau 5**

| **Mélanges** | **Contrainte à la rupture (Mpa)** | **Déformation à la rupture (%)** | **Module de Young (MPa)** | **Contrainte au point Yield (MPa)** | **Déformation au point Yield (%)** | **MFI (g/10min.)** |
|---|---|---|---|---|---|---|
| **Dabo 40a** | **31** +/-**1,6** | **744** +/-**41** | *386 +*/*-44* | 24,4 +/-0,3 | 10 +/-0,5 | 1,01 |
| **Dabo 40b** | **15,3** +/-**1,1** | **98** +/-**20** | *419 +*/*-46* | 25,2 +/-2,2 | 11,2 +/-2,5 | 0,53 |
| **Dabo 40c** | **21,7** +/-**2,4** | **468** +/-**55** | *414 +*/*-30* | 25,5 +/-0,5 | 10 +/-1 | 0,70 |

**Tableau 6**

| **Mélange** | **T_{fus} (°C)** | **W_{c} PE seul (%)** | **T_{dég}, sous air (°C)^{a}** | **T_{dég}, sous He (°C)^{a}** |
|---|---|---|---|---|
| **Dabo 40a** | 134,5 | 62,6 | 421 | 493 |
| **Dabo 40b** | 134,9 | 62,4 | 473 | 498 |
| **Dabo 40c** | 135,6 | 61,7 | 485 | 498 |

| | | | | |
|---|---|---|---|---|
| ^{a} Déterminé par le maximum de la dérivée du thermogramme (voir Fig. 6). | | | | |

**Tableau 7**

| Echantillon | SWNTs | Quantité de MAO "fixée" | [Al]/[Zr] | Masse PE obtenue | Activité (kg/mol_{zr}.ₕ) |
|---|---|---|---|---|---|
| Dabo B 013a | Non | 9 mmol | 783 | 15,64 g | 1360 |
| Dabo B 012 | Oui | 9 mmol | 783 | 21,28 g | 1850 |

**Tableau 8**

| **Temps de Prélèvement ^{a}** | **% en pds en Al₂O₃^{b}** | **% en pds en PE^{c}** | **% en pds en H₂O^{c}** | **% en pds en SWNTs^{d}** | **T_{fus} (°C)^{e}** | **W_{c} PE (seul)^{f}** |
|---|---|---|---|---|---|---|
| **t₁(Dabo B015a)** | 25,5 | 30,2 | 16,6 | 27,7 | 130,0 | 26 |
| **t₂ (Dabo B 015b)** | 20,6 | 48,4 | 13,7 | 17,3 | 131,5 | 43 |
| **t₃ (Dabo B 015c)** | 15,3 | 63,4 | 10,2 | 11,1 | 133,5 | 51 |
| **t₄ (Dabo B 015d)** | 5,1 | 82,8 | 4,1 | 7,2 | 133,8 | 57 |

| | | | | | | |
|---|---|---|---|---|---|---|
| ^{a} temps écoulé entre chaque prélèvement est d'environs 1 à 2 minutes ; ^{b} Déterminer par TGA sous air (20 °C/min, pris à 900 °C) ; ^{c} Déterminer par TGA sous hélium (20 °C/min) ; ^{d} Déterminer grâce à la connaissance de la quantité de PE, d'alumine et d'eau ; ^{e} Déterminer lors du second passage en DSC cyclique (10°C/min) sur des échantillons séchés à 150°C ; ^{f} Taux de cristallinité calculé sur base du taux de PE obtenu par TGA sur des échantillons séchés à 150°C. | | | | | | |

**Tableau 9**

| Echantillon | SWNTs | T_{fus}. (°C)^{a} | Wc (%)^{b} | Taux d'alumine^{c} (% en pds ) | Taux de NTs^{d} (% en pds) |
|---|---|---|---|---|---|
| Dabo B 013a | Non | 132,9 | 71 | n.d. | n.d. |
| Dabo B 012 | Oui | 135,3 | 59 | 1,2 | 2,2 |

| | | | | | |
|---|---|---|---|---|---|
| ^{a} Déterminé lors du second passage en DSC cyclique (10 °C/min) ; ^{b} Calculé à partir de l'enthalpie de fusion lors du second passage en DSC cyclique ; ^{c} Déterminé par TGA sous air (20°C/min) ; ^{d} Déterminé par TGA sous hélium (20°C/min) auquel on soustrait le résidu de la TGA sous air. | | | | | |

### REFERENCES

[1] A. B. Morgan, J. W. Gilman, T. Kashiwagi, C. L. Jackson ; Flammability of polymer-clay nanocomposites (March 12-15 2000), the National Institute of Standards and Technology.
[2] F. Gao ; e-Polymers (2002), no. T-004.
[3] P. M. Ajayan ; Chem. Rev. (1999) 99, 1787-1799.
[4] B. G. Demczyk, Y. M. Wang, J. Cumings, M. Hetman, W. Han, A. Zettl, R. O. Ritchie ; Mater. Sci. Eng. (2002) A334, 173-178.
[5] Kin-Tak Lau, D. Hui ; Composites Part B : Eng., (2002) 33, 263-277.
[6] E. T. Thostenson, Z. Ren, Tsu-Wie Chou ; Composite Sci. Tech. (2001) 61, 1899-1912.
[7] H. Hagimoto, T. Shiono, T. Ikeda ; Macromolecules (2002) 35, 5744-5745.
[8] Dubois P. et al. ; J. Macromol. Sci., Rev. Macromol. Chem. Phys. (1998) C38, 511-566

## Revendications

1. Nanocomposite comprenant une dispersion de nanotubes de carbone au sein d'une matrice polymérique, dans lequel ladite matrice polymérique comporte une polyoléfine polymérisée in situ sur lesdits nanotubes de carbone ladite polyoléfine formant un enrobage autour dudit nanotube de carbone.

2. Nanocomposite selon la revendication 1 **caractérisé en ce que** ladite dispersion est globalement exempte de fagots de nanotubes de carbone.

3. Nanocomposite selon la revendication 1 ou 2 **caractérisé en ce que** ladite polyoléfine est du polyéthylène.

4. Nanocomposite selon l'une quelconque des revendications 1, 2 ou 3 **caractérisé en ce que** ledit enrobage est formé lors d'une catalyse supportée de type « metallocène », le support étant constitué desdits nanotubes de carbone.

5. Nanocomposite selon l'une quelconque des revendications précédentes **caractérisé en ce que** ladite catalyse supportée in situ se fait par l'intermédiaire d'un couple catalyseur/ cocatalyseur qui est chemisorbé à la surface desdits nanotubes de carbone.

6. Nanocomposite selon l'une quelconque des revendications précédentes, **caractérisé en ce que** la surface de contact entre deux nanotubes de carbone au sein de ladite dispersion est inférieure à 20 % de la surface totale desdits nanotubes de carbone.

7. Nanocomposite, selon l'une quelconque des revendications précédentes **caractérisé en ce que** la surface de contact entre deux nanotubes de carbone au sein de ladite dispersion est inférieure à 10 % de la surface totale desdits nanotubes de carbone.

8. Nanocomposite, selon l'une quelconque des revendications précédentes **caractérisé en ce que** la surface de contact entre deux nanotubes de carbone au sein de ladite dispersion est inférieure à 5 % de la surface totale desdits nanotubes de carbone.

9. Mélange maître comportant un polymère d'addition et le nanocomposite selon l'une quelconque des revendications précédentes.
